Europäisches Patentamt

**European Patent Office**

Office européen des brevets

(19)

(11) Publication number:

**0 284 444**
**A2**

(12) # EUROPEAN PATENT APPLICATION

(21) Application number: **88302753.4**

(22) Date of filing: **28.03.88**

(51) Int. Cl.4: **H 01 M 6/14**

(30) Priority: **27.03.87 US 30533**

(43) Date of publication of application:
**28.09.88 Bulletin 88/39**

(84) Designated Contracting States: **DE FR GB**

(71) Applicant: **EVEREADY BATTERY COMPANY, INC.**
**Checkerboard Square**
**St. Louis Missouri 63164 (US)**

(72) Inventor: **Tucholski, Gary R.**
**6317 Dellrose Drive**
**Parma Heights, OH 44130 (US)**

**Drengler, George R.**
**31910 Lake Road**
**Avon Lake, OH 44012 (US)**

**Bailey, John C.**
**23447 Emmons Road**
**Columbia Station, OH 44028 (US)**

(74) Representative: **Tubby, David George et al**
**MARKS & CLERK 57-60 Lincoln's Inn Fields**
**London WC2A 3LS (GB)**

(54) **Cells with pressure sensitive vents.**

(57) A nonaqueous, particularly a lithium-oxyhalide, cell, comprising at least a liquid cathode and a pressure-sensitive vent, is characterised in having a specific void volume, defined at 21°C, which ensures venting both before a dangerous pressure build-up can occur and before the internal temperature can reach the melting point of the anode, while still permitting a good service-life.

EP 0 284 444 A2

**Description**

CELLS WITH PRESSURE SENSITIVE VENTS

The present invention relates to electrochemical cells having a liquid cathode, such as an oxyhalide, an anode, such as lithium, and a pressure-sensitive vent adapted to open at a predetermined internal pressure.

Galvanic cells may generate large quantities of gas under certain conditions occurring during use. Since many such cells are required to be tightly sealed in order to prevent loss of electrolyte by leakage, high internal gas pressures may develop. Such pressures may cause leakage, bulging or possible rupture of the cells' container if not properly vented.

In the past several different types of resealable pressure relief vent valves have been used for releasing high internal gas pressures from inside a sealed galvanic cell. One type of valve that has been commonly used consists basically of a valve member such as a flat rubber gasket which is biased into sealing position over a vent orifice by means of a resilient member, such as a helical spring. The resilient member or spring is designed to yield at a certain predetermined internal gas pressure so as to momentarily break the seal and allow the gas to escape through the vent orifice.

In U.S. Pat. No 3,664,878, a resealable vent is disclosed which comprises a resilient deformable ball of elastomeric material positioned to overlie a vent orifice provided within the cell's container. A retaining means is positioned over the resilient ball to keep it in place over the vent orifice and in contact with a valve seat provided around the peripheral edge portions of the vent orifice, and also to flatten the ball to form a fluid-tight seal. The ball is also capable of undergoing further temporary deformation upon the build-up of a predetermined high internal gas pressure inside the container, so as to momentarily break the seal and allow gas to escape through the vent orifice.

However, with the continuing development of portable electrically powered devices, such as tape recording and playback machines, radio transmitters/receivers, and the like, a new type of reliable long service life cell, or battery, has been developed. These newly developed electrochemical cell systems utilise highly reactive anode materials such as lithium, sodium and the like, in conjunction with high energy density nonaqueous liquid cathode materials and a suitable salt.

Certain materials are capable of acting both as an electrolyte carrier, i.e. as solvent for the electrolyte salt, and as the active cathode for a nonaqueous electrochemical cell. U.S. Pat. No. 4,400,453 discloses a nonaqueous electrochemical cell comprising an anode, a cathode collector and cathode-electrolyte, said cathode-electrolyte comprising a solution of an ionically conductive solute dissolved in an active cathode depolariser, the active cathode depolariser comprising a liquid oxyhalide of an element of Group V or Group VI of the Periodic Table. Such nonaqueous cathode materials include sulphuryl chloride, thionyl chloride, phosphorus oxychloride, thionyl bromide, chromyl chloride, vanadyl tribromide and selenium oxychloride.

The "Periodic Table", as referred to herein, is the Periodic Table of the Elements as set forth on the inside back cover of the Handbook of Chemistry and Physics, 63rd Edition, The CRC Press Inc., Boca Raton, Fla., USA, 1982-1983.

It has been found that, when employing high energy density liquid cathode materials in nonaqueous cell systems, cells exhibit higher voltages than cells which employ conventional aqueous systems. This results in fewer cell units being required to operate a particular battery-powered device. In addition, many of the oxyhalide nonaqueous cells display relatively flat discharge voltage-versus-time curves. Thus, these cells can be employed to produce batteries that will provide a working voltage closer to a designated cut-off voltage than is practicable with some conventional aqueous systems which generally do not exhibit flat discharge voltage-versus-time curves.

A disadvantage in the use of liquid cathode nonaqueous, e.g. oxyhalide, cells, is that it is possible for some of the cathode material or the reaction products to escape from the cell during storage or use. This escape of liquids and/or gases could cause damage to the device employing the cell, or to the surface of the area, such as a compartment or shelf, where the cell is stored. Alternatively, if the seal of the cell is effectively permanently secured, then it is possible for the build-up of internal pressure to cause the cell container to rupture, possibly causing property and/or bodily damage.

To prevent rupture of the cell's container from possible internal pressure build-up caused under abusive conditions, such as charging and exposure to a high temperature environment, it is necessary to vent the cell at some predetermined pressure. It has been reported that some oxyhalides such as thionyl chloride and sulfuryl chloride should be vented at pressures below about 500 psi (3450 kPa) and preferably between about 250 and 400 psi (1720 and 2760kPa).

U. S. Pat. No. 4,329,405 discloses a safety blow-out vent closure for galvanic cells, such as nonaqueous oxyhalide cells, which comprises a conductive tubular member secured to the cell's housing and surrounding a vent orifice. A deformable member is force-fitted in the vent orifice and is adapted to be at least partially ejected from the vent orifice at a predetermined internal gas pressure within the cell.

In some applications, the wall defining the vent orifice in the cover may be subjected to corrosion at the deformable member-wall interface. Such corrosion can roughen the wall surface, thereby increasing the coefficient of friction between the deformable member and the wall of the vent orifice, thereby resulting in the venting of the cell at unpredictable pressures. To overcome this potential problem, U. S. Patent No. 4,529,673 discloses the use of a corrosion-resistant material disposed at the interface of the wall defining a vent orifice and a force-fitted member.

However, during storage and discharge some electrolyte may, at times, leak at the interface of the wall defining the vent orifice and the corrosion-resistant material. To prevent such an occurrence, U. S. Patent No. 4,592,970 discloses the concept of employing a sealant between the wall defining the orifice and the liner so as to prevent electrolyte leakage at the interface of the liner and the wall defining the orifice.

Although the above vents are ideally suited to operate at a pressure build-up within a cell to between 250 psi and 400 psi (1720-2760kPa), some low pressure cell systems, such as the lithium-oxyhalide cell system, can have an internal temperature rise to and above the melting point of the anode before the pressure is sufficient to open the vent. Thus, vents are available for venting low pressure cell systems, but they are not effective if the temperature within the cell rises to the melting temperature of the anode before the venting pressure is reached.

We have discovered that the pressure within the cell increases at a lower, controlled rate with temperature, if the cell is manufactured with a controlled void volume at 21°C. Thermal expansion of the oxyhalide, such as $SOCl_2$, results in an increase in the cell's internal pressure, and is accommodated by the void volume designed into the cell construction.

We provide a nonaqueous, particularly a lithium-oxyhalide, cell, comprising at least a liquid cathode and a pressure-sensitive vent, which is characterised in having a specific void volume, defined at 21°C, which ensures venting both before a dangerous internal pressure build-up can occur and before the internal temperature can reach the melting point of the anode, and which cell still has a good service-life.

The present invention provides an electrochemical cell comprising a closed housing having a vent adapted to open at a predetermined internal pressure and containing the active components of the cell, the active components including an anode and at least one liquid cathode, characterised in that the internal volume of the cell has a void volume of between about 2% and about 12% at 21°C.

In an alternative aspect of the present invention, there is provided an electrochemical cell comprising a closed housing having a vent adapted to open at a predetermined internal pressure and containing the active components of the cell, the active components including an anode and at least one liquid cathode, characterised in that the internal volume of the cell has a void volume adapted to cause opening of the vent prior to the internal temperature reaching 180°, preferably 160°C.

According to a yet further aspect of the present invention, there is provided an electrochemical cell comprising a closed housing containing the electrochemically active components therefor, and having a vent adapted to open at a predetermined internal pressure, the active components comprising an anode and at least one liquid cathode, characterised in that the internal volume of the cell comprises a void volume adapted to cause opening of the vent prior to the internal temperature reaching 180, and preferably 160°C.

As used herein "void volume" means the volume within the cell that is not occupied by any of the cell's solid or liquid components. For cells using lithium anodes, the temperature within the cell should not exceed about 180°C, around the melting point of lithium before the cell vents. The internal temperature of a lithium cell should preferably not exceed about 160°C for most applications.

Table 1 shows the vapour pressure in psi (kPA in brackets) versus temperature in centigrade for $SOCl_2$.

<u>TABLE 1</u>

| <u>Pressure (psi)</u> | | <u>Temperature (°C)</u> |
|---|---|---|
| 50 | (345) | 125 |
| 100 | (690) | 150 |
| 150 | (1030) | 175 |
| 200 | (1380) | 185 |
| 250 | (1720) | 200 |
| 300 | (2070) | 210 |
| 400 | (2760) | 225 |

As is shown in Table 1, the internal pressure within a cell containing an oxyhalide, such as $SOCl_2$, increases with temperature. In addition, during discharge of an $SOCl_2$ cell, the internal cell pressure increases due to the formation of $SO_2$. Consequently, if a lithium-$SOCl_2$ cell is manufactured with a zero void volume at 21°C and is subsequently discharged and/or subjected to a high temperature environment, the internal pressure could increase to a degree sufficient to cause the cell's vent to open prior to the complete discharge of the cell. The result is waste and inefficiency.

Alternatively, if the cell is made with a void volume of greater than 15%, any thermal expansion or internal pressure can be accommodated by the void volume. This is not necessarily advantageous, as it can result in the internal temperature reaching the melting point of the anode prior to venting. This is particularly true of cells employing lithium anodes, which melt around 180°C. If the anode were to burn, the temperature within the cell would further increase, and the cell could explode, causing damage to the device being powered.

The thermal expansion of $SOCl_2$ in an F-size cell (1.25 inches (3.175cm) OD and 3.30 inches (8.38cm) high) is about 0.43 cc per 10°C temperature rise. Without a controlled void volume, the internal pressure could increase quickly and cause venting prior to complete discharge. Thus, by designing the cell with a controlled void volume at 21°C, conventional, low pressure vents can be used, and full discharge under various temperature environments below the melting point of the anode allowed. By designing the cell with a specific void volume, early venting can be prevented during normal discharge, and safe venting of the cell under abusive conditions is ensured at temperatures below the melting point of the anode.

Advantageously, the void volume of a lithium-oxyhalide cell is between about 2% and about 12% at 21°C so that the cell vents at a pressure between about 250 psi and 400 psi (1720 and 2760kPa). Preferably, the void volume is between about 4% and 8%. It will be appreciated that the specific void volume for a cell will depend on the size of the cell and container strength. Preferably, the void volume is so arranged that, when the cell is heated to between about 90° and about 110°C, the thermal expansion of the liquid cathode, for example $SOCl_2$, will cause the cell to have an approximately zero void volume. The cells of the present invention are leak-free and non-vented under normal discharge conditions but are capable of venting safely prior to the cell temperature rising to the melting point of the anode.

Suitable nonaqueous liquid cathode materials for use in cells of the present invention could be one or more of the liquid oxyhalides of an element of Group V or Group VI of the Periodic Table. Suitable nonaqueous cathode materials include sulphuryl chloride, thionyl chloride, phosphorus oxychloride, thionyl bromide chromyl chloride, vanadyl tribromide and selenium oxychloride.

Anodes suitable for use in nonaqueous liquid cathode cell systems are generally consumable metals and include the alkali metals, alkaline earth metals and alloys of alkali metals or alkaline earth metals with each other and other metals. The term "alloy" as used herein includes: mixtures; solid solutions such as lithium-magnesium; and intermetallic compounds such as lithium monoaluminide. The preferred anode materials are alkali metals, particularly lithium, sodium, and potassium. Lithium anodes may be coated with a vinyl resin, for example, as described in U.S Pat. No. 3,993,501.

The cathode collector for use in liquid cathode cell systems needs to be electronically conductive so as to permit external electrical contact to be made with the active cathode material, as well as to provide extended area reaction sites for the cathodic electrochemical process of the cell. Materials suitable for use as cathode collectors include metals such as nickel, and carbon materials, acetylene black being preferred. In addition, the cathode collector, when made of a particulate material, should be capable of being moulded directly within a container or be capable of being manufactured in variously sized discrete bodies that may be handled without cracking or breaking. To impart a cohesive characteristic to some types of cathode collectors, a suitable binder material, with or without plasticisers and with or without stabilisers, can be added to the cathode collector materials. Suitable binder materials for this purpose include vinyl polymers, such as polyethylene, polypropylene, polyacrylics, polystyrene and the like. For example, polytetrafluoroethylene is the preferred binder for cathode collectors for use wth liquid oxyhalide cathodes.

Binder, if required, should be added in an amount between about 5% and about 30% by weight of the moulded cathode collector since an amount less than 5% does not provide sufficient strength to the moulded body, while an amount larger than 30% would wet-proof the surface of the carbon and/or reduce the available surface of the carbon, thereby reducing the activation site areas required for the cathodic electrochemical processes of the cell. Preferably, the binder should be between 10% and 25% by weight of the cathode collector. Of importance in selecting the materials for the cathode collector is the selection of materials which are chemically stable in the relevant cell system.

Suitable solutes for use in liquid cathode cell systems are simple or double salts which are capable of producing an ionically conductive solution when dissolved in a suitable solvent. Preferred solutes for nonaqueous systems are complexes of inorganic or organic Lewis acids and inorganic ionisable salts. The only requirements for utility are that the salt, whether simple or complex, be compatible with the solvent being employed and that it yield a solution which is ionically conductive. According to the Lewis or electronic concept of acids and bases (Journal of the Franklin Institute, Vol. 226, July/-December, 1983, pages 293-313 by G.N. Lewis), many substances which contain no active hydrogen can act as acids or acceptors of electron doublets.

A suggested reaction mechanism for the manner in which these complexes function in a solvent is described in detail in U.S. Pat. No. 3,542,602, wherein it is suggested that the complex or double salt formed between the Lewis acid and the ionisable salt yields an entity which is more stable than either of the components alone.

Typical Lewis acids suitable for use in conjunction with liquid oxyhalide cathodes include aluminum fluoride, bromide, and chlorides, antimony pentachloride, zirconium tetrachloride, phosphorus pentachloride, and boron fluoride, chloride and bromides.

Ionisable salts useful in combination with the Lewis acids include the lithium, sodium and potassium fluorides, chlorides and bromides and lithium sulphide.

It will be apparent to those skilled in the art that the double salts formed by a Lewis acid and an ionisable salt may be used as such, or the individual components may be added to the solvent separately to form the salt or the resulting ions in situ. One such double salt, for example, is that formed by the combination of aluminum chloride and lithium chloride to yield lithium aluminium tetrachloride.

Suitable separators for use with liquid cathodes in nonaqueous cells include non-woven glass separators.

The container of the cell may be made of stainless steel, iron, nickel, plastic, coated metals or other suitable materials.

Preferably, the cells for use in the present invention are liquid oxyhalide cells using sulphuryl chloride, thionyl chloride or mixtures thereof with a lithium anode.

The following Examples are illustrative of the present invention and are not limitating in any way.

EXAMPLE 1

The bottom bulge of annealed and unannealed stainless steel containers as a function of pressure within the container was observed. The data obtained from the tests are shown in Tables 2 and 3 (kPa in brackets).

## TABLE 2

### ANNEALED STAINLESS STEEL CONTAINERS

| Pressure (Psi) | | Net Bulge (mils) |
|---|---|---|
| 50 | ( 345) | 5 |
| 100 | ( 690) | 20 |
| 150 | (1030) | 32 |
| 200 | (1380) | 50 |
| 250 | (1720) | 65 |
| 300 | (2070) | 80 |
| 350 | (2410) | 97 |
| 400 | (2758) | 110 |
| 450 | (3100) | 128 |
| 500 | (3450) | 137 |

## TABLE 3

### UNANNEALED STAINLESS STEEL CONTAINER

| Pressure (Psi) | | Net Bulge (mils) |
|---|---|---|
| 150 | (1030) | 0 |
| 200 | (1380) | 3 |
| 250 | (1720) | 10 |
| 300 | (2070) | 15 |
| 350 | (2410) | 25 |
| 400 | (2760) | 32 |
| 450 | (3100) | 38 |
| 500 | (3450) | 50 |

## EXAMPLE 2

Several F-size coiled cells were made, each using a lithium foil anode, 1.8M $LiAlCl_4$-$SOCl_2$ as the cathode-electrolyte and a polytetrafluoroethylene bonded porous carbon cathode collector containing 20% nickel powder. Separating the lithium anode and the cathode collector was a glass fibre separator. A glass fibre separator was also placed around the coiled assembly so that the separator contacted the internal wall of the cell's stainless steel (annealed) container. A glass-to-metal seal was employed with the cathode collector eelectronically connected to the pin of the glass-to-metal seal. The lithium anode was electronically connected to the bottom of the container using a welded tab.

Each cell was designed with a different void volume and the internal pressure was calculated for various temperatures of the cell. The internal pressure was obtained by calculating the bottom bulge of the cell container based on the thermal expansion and vapour pressure of $SOCl_2$, and comparing these values with the data in Table 2. The data calculated for the test cells are shown in Tables 4, 5 and 6 (kPa shown in brackets).

## TABLE 4

38 cc's of 1.8 $LiAlCl_4$-$SOCl_2$ = Void Volume of 2.1%.

| Temperature (°C) | Pressure (psi) | |
|---|---|---|
| 50 | 10 | ( 69) |
| 60 | 20 | ( 138) |
| 75 | 300 | (2070) |
| 90 | 500 | (3450) |

7

## TABLE 5

37 cc's of 1.8 $LiAlCl_4-SOCl_2$ = Void Volume 3.9%.

| Temperature (°C) | Pressure (psi) | |
|---|---|---|
| 60 | 10 | ( 69) |
| 75 | 60 | ( 414) |
| 90 | 220 | (1520) |
| 100 | 300 | (2070) |
| 120 | 500 | (3459) |

## TABLE 6

36 cc's of 1.8 $LiAlCl_4-SOCl_2$ = Void Volume of 5.6%.

| Temperature (°C) | Pressure (psi) | |
|---|---|---|
| 75 | 10 | ( 69) |
| 90 | 20 | ( 138) |
| 100 | 90 | ( 621) |
| 115 | 200 | (1380) |
| 120 | 250 | (1720) |
| 125 | 310 | (2140) |
| 135 | 400 | (2760) |
| 145 | 500 | (3450) |

EXAMPLE 3

Cells were made as described in Example 2 and subjected to various temperature levels for a two hour period. Each cell was manufacturerd with a different void volume and with an annealed stainless steel container. The bulge at the cell container bottom was measured at each temperature level until each cell vented. The data obtained are shown in Table 7.

## TABLE 7

### Net Bulge (mils)

| Cell Sample | Void Vol. (%) | 75°C | 90°C | 103°C | 113°C | 130°C | 149°C |
|---|---|---|---|---|---|---|---|
| 1 | 0.2 | 100 | V | | | | |
| 2 | 2.3 | 33 | 67 | 95 | V | | |
| 3 | 2.6 | 38 | 64 | 92 | V | | |
| 4 | 2.9 | 17 | 45 | 65 | 105 | V | |
| 5 | 3.0 | 22 | 50 | 71 | 105 | V | |
| 6 | 3.3 | 21 | 60 | V | V | | |
| 7 | 3.5 | 4 | 24 | 49 | V | | |
| 8 | 3.6 | 25 | 42 | 61 | 93 | V | |
| 9 | 3.6 | 18 | 42 | 64 | 96 | V | |
| 10 | 3.9 | 8 | 35 | 57 | 95 | V | |
| 11 | 4.7 | 8 | 26 | 41 | 70 | V | |
| 12 | 5.1 | 7 | 26 | 42 | 70 | V | |
| 13 | 5.6 | 7 | 15 | 40 | 66 | 93 | V |
| 14 | 5.9 | 4 | 7 | 42 | 66 | 96 | V |
| 15 | 5.9 | 7 | 25 | 48 | 78 | 108 | V |
| 16 | 6.1 | 9 | 14 | 37 | 68 | 97 | V |
| 17 | 6.1 | 21 | 27 | 40 | 68 | 94 | 144 |
| 18 | 6.5 | 6 | 7 | 28 | 58 | 87 | V |

V = indicates temperature at which the cell vented.

EXAMPLE 4

Cells were made as described in Example 2 and subjected to various temperature levels for a two hour period. Each cell was manufacturered with a different void volume and with an unannealed stainless steel container. The bulge at the cell's container bottom was measured at each temperature level until each cell vented. The data obtained are shown in Table 8.

TABLE 8

| Cell Sample | Void Vol. (%) | 75°C | 90°C | 110°C | 130°C |
|---|---|---|---|---|---|
| 1 | 4.3 | 2 | 7 | V | - |
| 2 | 4.5 | 5 | 8 | V | - |
| 3 | 4.6 | 5 | 17 | V | - |
| 4 | 4.6 | 6 | 10 | 31 | V |
| 5 | 4.4 | 4 | V | - | - |

V = indicates temperature at which the cell vented.

The data above clearly illustrate that designing the cell with a specific void volume will effectively alter the internal pressure of the cell versus temperature so that the cell can be safely discharged under normal conditions and vent before the temperature of the cell increases to the melting temperature of the anode. From the above data, a void volume of about 6% for this size cell is preferred. Such a cell is designed to vent at about 300 psi (2070kPa), and at a cell temperature below 150°C.

**Claims**

1. An electrochemical cell comprising a closed housing having a vent adapted to open at a predetermined internal pressure and containing the active components of the cell, the active components including an anode and at least one liquid cathode, characterised in that the internal volume of the cell has a void volume of between about 2% and about 12% at 21°C.

2. An electrochemical cell comprising a closed housing having a vent adapted to open at a predetermined internal pressure and containing the active components of the cell, the active components including an anode and at least one liquid cathode, characterised in that the internal volume of the cell has a void volume adapted to cause opening of the vent prior to the internal temperature reaching 180°, preferably 160°C.

3. An electrochemical cell according to claim 1 or 2, wherein the cathode material is an oxyhalide.

4. An electrochemical cell according to any preceding claim, wherein the vent is adapted to open at a pressure between about 250 and about 400 pounds per square inch (1720 and 2760kPa).

5. An electrochemical cell according to any preceding claim, wherein the void volume is between about 4% and about 8% at 21°C.

6. An electrochemical cell according to any preceding claim, wherein the liquid cathode is comprises thionyl chloride, sulphuryl chloride, phosphorus oxychloride, thionyl bromide, chromyl chloride, vanadyl tribromide, selenium oxychloride or a mixture thereof.

7. An electrochemical cell according to any preceding claim, wherein the anode comprises lithium, sodium, calcium, potassium or aluminum.

8. An electrochemical cell according to any preceding claim, wherein the anode is lithium and the liquid cathode is thionyl chloride.

9. An electrochemical cell according to any preceding claim, wherein a Lewis acid, preferably lithium aluminum tetrachloride, is dissolved in the cathode.

10. An electrochemical cell according to any preceding claim, wherein the vent is adapted to open before the internal temperature reaches 160°C.